# EUROPEAN PATENT APPLICATION

(11) **EP 4 807 769 A1**
(43) Date of publication of application: **16.09.2026**
(21) Application number: 25163684.1
(22) Date of filing: 14.03.2025
(51) Int. Cl.: H01F 27/06, H01F 27/10, H01F 27/33, F16F 15/06

(54) **TRANSFORMER**

(71) Applicant: Hitachi Energy Ltd, 8050 Zürich (CH)
(72) Inventor: Denos, Rémy, 3073 Gümligen (CH); Hespel, Henri-Louis, 1225 Chêne-Bourg (CH)
(74) Representative: Epping - Hermann - Fischer

(57) **Abstract**

A transformer (1) comprises a tank (2) forming a housing of the transformer (1), an active part (3, 4) including electric components for transforming voltage, and a holding structure (5) that is coupled to the active part (3, 4). The transformer (1) further includes a cooling liquid that is arranged in the tank (2) for cooling the active part (3, 4) during operation of the transformer (1), and a metallic damper unit (10) that comprises at least one metallic damping element (11, 12, 13) formed as a mesh pad. The damper unit (10) is coupled to both the holding structure (5) and the tank (2) and arranged between the holding structure (5) and the tank (2) with respect to a weight load path. The active part (3, 4) and the damper unit (10) are immersed in the liquid.

## Description

The present disclosure is related to a transformer.

Transformers are used to transfer an output voltage of an electrical circuit to an input voltage for another electrical circuit. Transformers comprise an active part including a coil or winding which is closed in a tank or housing. In general, it is a challenge to increase the efficiency of a transformer.

Embodiments of the present disclosure relate to a transformer that enable reliable operation and contribute to an improved efficiency.

According to an embodiment, a transformer comprises a tank that forms a housing of the transformer. The transformer further comprises an active part including electric components, such as a coil or winding and a core, for transforming voltage. The transformer further comprises a holding structure that is coupled to the active part to support and hold it in its predetermined position in the tank. The transformer further comprises a cooling fluid or liquid, such as a transformer oil, arranged in the tank for cooling the active part during operation of the transformer. The transformer further comprises a metallic damper unit with at least one metallic damping element formed as a mesh pad or wire structure. The damper unit is coupled to both the holding structure and the tank and arranged between the holding structure and a wall of the tank with respect to a weight load path. The active part and the damper unit are immersed in the liquid inside the tank.

Due to the described configuration with the metallic damper unit and the mesh pad damping element and its arrangement between a tank wall and the holding structure, a transformer is feasible that enables reliable operation and an enhancement in efficiency. The metallic damping unit softly absorbs or takes up dimensional movement in one or more directions even if the cooling fluid reaches high temperatures during operation. Accordingly, the described damper unit realizes a beneficial component for movement compensation, such as vibration or acceleration, of the tank, the holding structure or the active part relative to each other in a liquid-immersed transformer. This also allows for movement compensation due to differential thermal expansion without friction or abrasion in preferred or all directions.

With the metallic mesh pad as the at least one damping element, the damper unit comprises a component made of metal or comprising metal at least. The mesh pad can be formed as a wire mesh or wire pad comprising an ordered or unordered structure. The mesh pad can form a sheath such as a cushion that enable adjusted damping and reliable movement compensation of the tank and/or the holding structure. The damping unit counteracts or compensates a movement which can have a detrimental effect of the connections by means of screws or bolts, for example. Accordingly, the damping unit or damping element can also be referred to as compensation unit or compensation element, respectively.

The weight load path can be oriented vertically or upright. Alternatively or additionally, the weight load path can have horizontal sections or components that enable load distribution and movement compensation due to the damper unit. The aforementioned orientations, such as an upright longitudinal axis, refer to an operational condition of the transformer and essentially represents a vertical axis. The bottom of the transformer is therefore usually arranged below the active part and may form a contact portion to an installation surface or ground. Consequently, a top of the transformer is usually arranged above the active part.

According to an embodiment of the transformer, the damper unit comprises a shaft element that couples the damper unit to the holding structure, and wherein the at least one metallic damping element surrounds the shaft element. For example, the shaft element comprises an elongated shape along an upright longitudinal axis and the at least one metallic damping element is configured to counteract a relative movement of the holding structure and/or the tank predominantly in a horizontal direction perpendicular to the longitudinal axis. Alternatively or additionally, the at least one metallic damping element is configured to counteract a relative movement of the holding structure (5) and/or the tank predominantly in the vertical direction of the longitudinal axis. For example, the metallic damping element is formed ring-shaped, disc-shaped, sleeve-shaped, conical shaped or shaped like a Donut or toric shaped to establish desired damping and movement compensation.

According to a further embodiment of the transformer, the damper unit comprises a housing that is coupled to the holding structure by means of the shaft element, and wherein the at least one metallic damping element is arranged inside the housing. In this way, the damping element can be securely arranged in its position inside the housing to reliably provide the predetermined damping or movement compensation. There can also be arranged two or more damping elements inside the housing so that a shape of the housing can be given in coordination with the arrangement and shape of the one or more damping elements inside.

According to a further embodiment of the transformer, the damper unit further comprises a damper flange that is coupled to shaft element and that directly interacts with the at least one metallic damping element. In this way, a reliable power transmission can be established so that a movement of the tank or the holding structure relative to each other can be transferred to and damped by means of the one or more damping element.

According to a further embodiment of the transformer, the at least one metallic damping element is formed as an ordered metallic lattice structure or deformable cage. Alternatively or additionally, one metallic damping element comprises a deformable metallic cushion cover or sheath. Alternatively or additionally, one metallic damping element is formed as a steel wool pad. Alternatively or additionally, one metallic damping element is formed as a knitted wire mesh. In each case, the structure of the metallic mesh pad of the at least one damping element enables reversible deformation and thus cushioning of relative movements of the tank and the holding structure.

According to a further embodiment of the transformer, the damper unit comprises the housing that encloses the at least one metallic damping element, wherein the housing comprises a connection section which is formed in coordination with a connection section of the tank so that the housing is coupled to the tank by means of the connection sections. In this way, a stable and secure connection can be established between the damper unit and the tank, e.g. a side wall of the tank. The connection sections each can be formed as a plate-shaped protrusion which are connected to each other by means of a screw or bolt. This enables a simple and reliable coupling.

According to a further embodiment of the transformer, the damper unit comprises a predetermined stiffness which is formed in coordination with characteristics of the transformer, such as a mass of the active part and/or operating conditions of the transformer. Preferably, the stiffness is given in such a manner that the damping unit has a long service life and provides a beneficial damping or movement compensation.

It is a finding of the present disclosure that conventional designs of a transformer require stable structures to withstand high loads, e.g. in case of vibration or acceleration of the active part. In addition, the interacting components must hold together reliably to counteract loosening of connections and reducing wear due to sliding friction contact. In Coulomb's law of friction, a maximum transmissible tangential force over a planar contact is directly proportional to the normal load that is applied. Thus, a contact pressure between clamps and tank consoles of a conservative transformer is usually ensured by a bolt, tightened at a prescribed torque, so that a portion of the axial load can be tangentially transmitted, to prevent the whole active part and its clamps from sliding over the tank consoles under large accelerations.

To allow for small relative displacements under differential thermal expansion and avoid severe metallic abrasion, there can be a thermo-plastic plate. However, this contradicts to withstand high loads in case of vibration or acceleration of the active part. Accordingly, amongst other existing designs of transformers are formed with specific weight limitations on the active part, for example.

Due to the described configuration of the transformer, corresponding designs are feasible way beyond such weight limitations. The application of one or more metallic damper units for clamping the active part by means of the holding structure inside traction transformers allows for beneficial thermal expansion compensation and vibration and shock filtering. The in-tank metallic damper units form a buffer system suitable for traction transformer application, in particular.

The metallic damper units provides a mechanical link between the active part clamping system and the transformer tank realized by the holding structure and connection sections to one or more tank walls. Consequently, bolted or screwed connections which are intended prevent relative movement between the holding structure and tank consoles or connection sections can be secured or stabilized because the load acting on them is absorbed, dissipated or distributed due to the one or more metallic damper units.

It is a finding of the present disclosure that due to different materials, their interface can slide under cyclic temperature loading, which can cause bolt loosening, abrasion, and vibrations. The described configuration of the transformer counteracts such adverse effects and allows for controlled relative displacement by tuning the connection's stiffness in all six directions, up, down, right, left, front, rear.

The metallic damper unit can be adapted to various active part weights, enhancing the transformer's robustness, longevity, and performance. It enables to compensate differential thermal expansion without or at least significantly reduced friction or abrasion in preferred directions. It further contributes to high resistance against high accelerations or vibrations of the active part in all directions.

The metallic damper unit realizes a deformable interface that consists of a sealed metallic damping element instead of a pure frictional contact. A rigid connection between the metallic damper unit and the clamp or holding structure and the tank can be ensured by means of tightly adjusted interfaces and/or heavy load bolts or screws. The metallic damper unit can include a housing realizing a damper casing with the deformable mesh pad enclosed therein. Additionally, a main shaft or rod and any bolt or flange used for interfacing with holding structure and the tank can be coupled in or to the housing as well. In case of thermal expansion, vibration or shock, the one or more internal mesh pads deform to absorb movement, allowing for the shaft or rod to displace relative to the fixed casing of the damper unit. The described configuration is no longer limit imposed by a maximum transmissible frictional force, but to a stiffness and resistance of the damping element or the damper unit itself.

The metallic damper unit can comprise a set of metallic cushion, steel wool pads and/or knitted mesh pads forming respective metallic damping elements which are preferably arranged inside a damper casing with a predetermined shape. The metallic damping elements preferably have predefined stiffness behaviours to match with the traction transformer characteristics, such as mass, and targeted operating conditions, such as acceleration level, temperature variation and/or excitation frequency.

The damper unit is rigidly connected to the clamp or holding structure, e.g. by means of the rod or shaft element, ensuring tight adjustment, such that loads from the holding structure and the tank are transmitted by contact pressure, not or only slightly by friction. A damper casing itself can mounted on tank consoles which form connection sections using several large bolts or screws. Sufficient tightening torque can be applied to guarantee the absence of sliding under thermal expansion, vibrations and shocks. The one or more metallic damping mesh pads are then the only elements of the assembly that deform under load in a controlled manner.

The described configuration of the metallic damper units can be intended to be used with transformers with structural aluminium beams, that rely on aluminium beams as a holding structure to clamp the active part in the tank. Two main variations of the solution can be foreseen. The first one designed for relatively heavy active parts, e.g. with a weight of two tons or more, and another one, with softer metallic pads and smaller bolts, for lighter active parts, e.g. with one to two tons, below the identified mass threshold.

The described technical concept has already been validated by means of numerical simulations (Finite Element Analyses, FEA), based on the relevant applicable railway standards EN12663 and IEC61373 for static, fatigue, shock and vibration assessment.

Exemplary embodiments are explained in the following with the aid of schematic drawings and reference numbers. The figures show:
- Figures 1-2: an embodiment of a transformer with a metallic damper unit in different views; and
- Figures 3-4: embodiments of the damper unit of the transformer in side views.

The accompanying figures are included to provide a further understanding. It is to be understood that the embodiments shown in the figures are illustrative representations and are not necessarily drawn to scale. Identical reference numbers designate elements or components with identical functions. In so far as elements or components correspond to one another in terms of their function in different figures, the description thereof is not repeated for each of the following figures. For the sake of clarity elements might not appear with corresponding reference symbols in all figures, possibly.

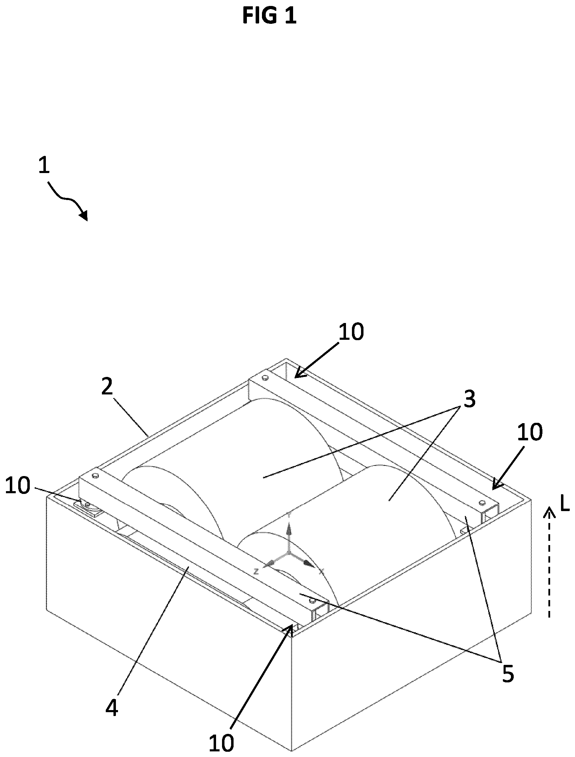

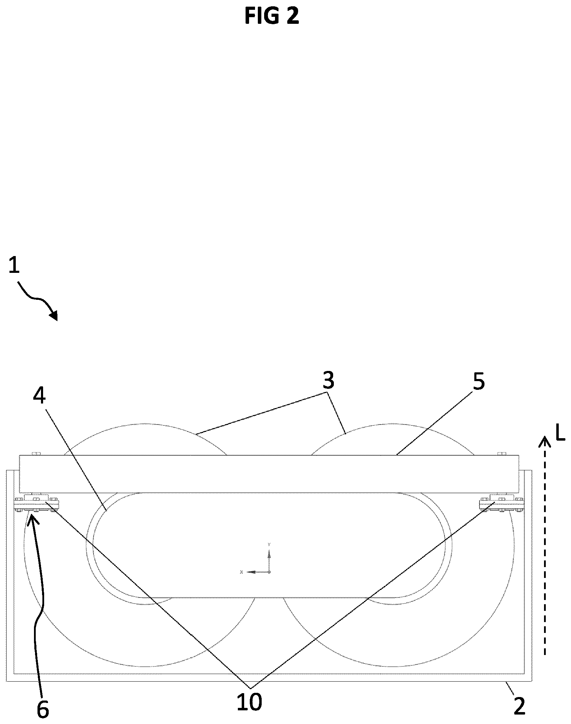

Figure 1 illustrates an embodiment of a transformer 1 in a perspective view. Figure 2 illustrates the transformer 1 in a cross section side view. The transformer 1 comprises a tank 2 that forms a housing of the transformer 1, an active part including a winding 3 and a core 4 as electric components for transforming voltage, and a cooling fluid, e.g. a transformer oil, for cooling the active part 3, 4 during operation of the transformer 1. The transformer 1 further comprises a holding structure 5 that is coupled to the active part 3, 4 and holds it in place inside the tank 2. The holding structure 5 comprises two structural beams 5 to securely support and clamp the active part 3, 4 in its position in interaction with connection sections 6 of the tank 2.

The transformer 1 further comprises four metallic damper units 10 that each include one or more metallic damping elements 11, 12, 13 formed as a mesh pad, such as a steel wool pad or a wire cushion. According to the illustrated embodiments, the transformer 1 comprises four damper units 10, one damper unit 10 assigned to a respective corner of the cuboid tank 2 and assigned to a respect end portion of the corresponding structural beam 5. In the following, only one damper unit 10 is predominantly described below, whereby the properties and functions apply accordingly to the others.

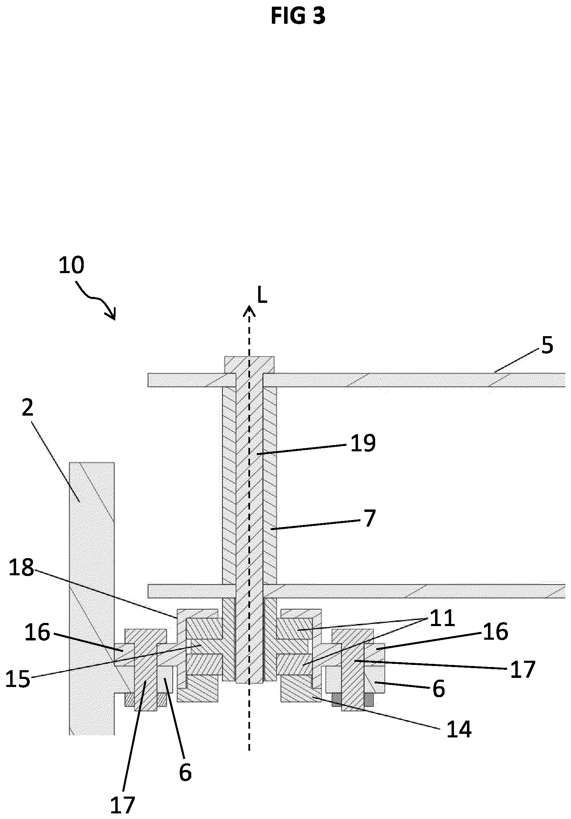

The damper unit 10 is coupled to both the holding structure or structural beam 5 and a corresponding connection section 6 of the tank 2 at a side wall of the tank 2 (see Figs. 2 and 3). The respective damper unit 10 is arranged between the holding structure 5 and a side wall of the tank 2 so that a weight load path is given, which is predominantly vertical with respect to the illustrated Figures. The active part 3, 4 and the damper unit 10 are immersed in the liquid inside the tank 2.

Due to the described configuration with the damper units 10 between the holding structure 5 and the side walls of the tank 2, the transformer 1 enables reliable operation and an enhancement in efficiency. The damper units 10 softly absorbs or takes up dimensional movement of the tank 2 and/or the holding structure 5 in one or more directions.

Figure 3 illustrates an embodiment of the metallic damper unit 10 in a cross section side view. The damper unit 10 is coupled to the structural beam 5 by means of a shaft element 19 that has an elongated shape along an upright longitudinal axis L. According to the figures, the upright longitudinal axis L can also be referred to as vertical. Accordingly, a transformer bottom forms a contact portion to an installation surface or ground and the structural beams 5 are arranged at a top of the transformer 1 according to the exemplary embodiment.

The shaft element 19 is surrounded by a stabilizing element 7 arranged in the structural beam 5. A damper flange 15 is coupled to shaft element 19 and interacts with two metallic damping elements 11, one above and one below the damper flange 15. The shaft element 19 couples the damper unit 10 to the holding structure 5. The damping elements 11 are ring- or disc-shaped and surround the shaft element 19. Below the lower damping element 11 there is a damper cap 14 arranged which may form a bottom for the housing 18 to support the damping elements 11.

The damper unit 10 further comprises a casing or housing 18 that encloses the damping elements 11. The housing 18 comprises a connection section 16 which interacts with the connection section 6 of the side wall of the tank 2. The connection are formed as plate-shaped protrusions which are connected to each other by means of screws or bolts 17. Accordingly, the housing 18 is coupled to the tank 2 by means of the connection sections 6, 16.

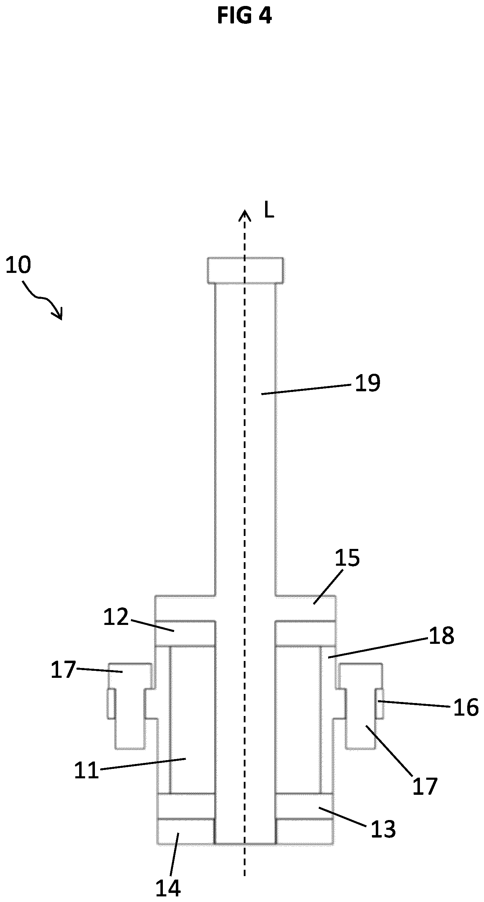

Figure 4 illustrates a further embodiment of the metallic damper unit 10 in a cross section side view. The damper unit 10 comprises three metallic damping elements 11, 12, 13 wherein two are ring- or disc-shaped and the middle one is sleeve-shaped. The damping elements 11, 12, 13 can be formed as an ordered metallic lattice structure, wire mesh, steel wool pad or deformable metallic cushion cover. The damper flange 15 is arranged above the damping elements 11, 12, 13 and may form a top for the sleeve-shaped housing 18.

Due to different shapes, materials and/or sizes, the damping elements 11, 12, 13 can comprise different stiffnesses and can provide different damping or movement compensation. For example, the middle damping element 11 may provide relative movement compensation of the holding structure 5 or the tank 2 predominantly in a direction of the longitudinal axis L. The upper and lower damping elements 12, 13 may provide relative movement compensation of the holding structure 5 or the tank 2 predominantly in a direction perpendicular to the longitudinal axis L. In combination, the damping elements 11, 12, 13 provide relative movement compensation in all six directions, viz. front, rear, up, down, left and right.

The metallic damper unit 10 is provided to accommodate an expansion or retraction or movement of the adjacent components of the transformer 1 in response to heat, for example. The one or more metallic damping elements 11, 12, 13 provide an elastic response to the movement and dampen it in a certain way. Accordingly, the metallic damping elements 11, 12, 13 counteract or compensate for the expansion or movement of the tank 2 or the holding structure 5 and thus dampen the transmission of the expansion.

The embodiment shown in the figures 1 to 4 as stated represent an exemplary embodiment of the improved transformer 1. Therefore, it does not constitute all embodiments. Actual arrangements may vary from the embodiment shown in the figures.

### Reference Signs

- 1: transformer
- 2: tank
- 3: active part / winding
- 4: active part / core
- 5: holding structure / structural beam
- 6: connection section of the tank
- 7: stabilizing element
- 10: metallic damper unit
- 11: first metallic damping element
- 12: second metallic damping element
- 13: third metallic damping element
- 14: damper cap
- 15: damper flange
- 16: connection section of the housing
- 17: screw / bolt
- 18: housing
- 19: shaft element

- L: longitudinal axis of the shaft / upright axis

## Claims

**1.** Transformer (1), comprising:
- tank (2) forming a housing of the transformer (1),
- an active part (3, 4) including electric components for transforming voltage,
- a holding structure (5) that is coupled to the active part (3, 4),
- a cooling liquid arranged in the tank (2) for cooling the active part (3, 4) during operation of the transformer (1), and
- a metallic damper unit (10) that comprises at least one metallic damping element (11, 12, 13) formed as a mesh pad, wherein the damper unit (10) is coupled to both the holding structure (5) and the tank (2) and arranged between the holding structure (5) and a tank wall with respect to a weight load path, wherein the active part (3, 4) and the damper unit (10) are immersed in the liquid inside the tank (2).

**2.** Transformer (1) according to claim 1, wherein the damper unit (10) comprises a shaft element (19) that couples the damper unit (10) to the holding structure (5), and wherein the at least one metallic damping element (11, 12, 13) surrounds the shaft element (19).

**3.** Transformer (1) according to claim 2, wherein the damper unit (10) further comprises a housing (18) that is coupled to the holding structure (5) by means of the shaft element (19), and wherein the at least one metallic damping element (11, 12, 13) is arranged inside the housing (18).

**4.** Transformer (1) according to claim 2 or 3, wherein the damper unit (10) further comprises a damper flange (15) that is coupled to shaft element (19) and that directly interacts with the at least one metallic damping element (11, 12, 13).

**5.** Transformer (1) according to any of the preceding claims, wherein the at least one metallic damping element (11, 12, 13) is formed as an ordered metallic lattice structure.

**6.** Transformer (1) according to any of the preceding claims, wherein the at least one metallic damping element (11, 12, 13) comprises a deformable metallic cushion cover.

**7.** Transformer (1) according to any of the preceding claims, wherein the at least one metallic damping element (11, 12, 13) is formed as a steel wool pad.

**8.** Transformer (1) according to any of the preceding claims, wherein the at least one metallic damping element (11, 12, 13) is formed ring-shaped, disc-shaped or sleeve-shaped.

**9.** Transformer (1) according to claim 8 in combination with claim 2, wherein the shaft element (19) comprises an elongated shape along a longitudinal axis (L) and the at least one metallic damping element (12, 13) is configured to counteract a relative movement of the holding structure (5) and/or the tank (2) predominantly in a direction perpendicular to the longitudinal axis (L).

**10.** Transformer (1) according to claim 8 or 9 in combination with claim 2, wherein the shaft element (19) comprises an elongated shape along a longitudinal axis (L) and the at least one metallic damping element (11) is configured to counteract a relative movement of the holding structure (5) and/or the tank (2) predominantly in the direction of the longitudinal axis (L).

**9.** Transformer (1) according to any of the preceding claims, wherein the damper unit (10) comprises a housing (18) that encloses the at least one metallic damping element (11, 12, 13), and wherein the housing (18) comprises a connection section (16) which is formed in coordination with a connection section (6) of the tank (2) so that the housing (18) is coupled to the tank (2) by means of the connection sections (6, 16).

**10.** Transformer (1) according to claim 9, wherein the connection sections (6, 16) each are formed as a plate-shaped protrusion which are connected to each other by means of a screw or bolt (17).

**11.** Transformer (1) according to any of the preceding claims, wherein the damper unit (10) comprises a predetermined stiffness which is formed in coordination with characteristics of the transformer (1) including a mass of the active part (3, 4) and/or operating conditions of the transformer (1).
